# EUROPEAN PATENT SPECIFICATION

(11) **EP 3 906 984 B1**
(45) Date of publication and mention of the grant of the patent: **05.08.2026**
(21) Application number: 20173668.3
(22) Date of filing: 08.05.2020
(51) Int. Cl.: B01D 17/02, B01D 17/12, B04B 5/10, C10G 33/08

(54) **A WASTE FUEL OIL SEPARATION SYSTEM AND METHOD USING THE SAME**
SYSTEM UND VERFAHREN ZUR TRENNUNG VON ALTHEIZÖL
SYSTÈME ET PROCÉDÉ DE SÉPARATION DE DÉCHETS DE CARBURANT

(43) Date of publication of application: 10.11.2021
(73) Proprietor: Alfa Laval Corporate AB, 221 00 Lund (SE)
(72) Inventor: MESLOT, Nicolas, SE-146 36 TULLINGE (SE)
(74) Representative: Alfa Laval Attorneys

(56) References cited:
- EP-A1- 2 181 744
- EP-A1- 3 290 093
- EP-A2- 0 123 491
- US-A- 3 047 214

## Description

### TECHNICAL FIELD

The invention relates to a method for operating a waste fuel oil separation system according to the appended claims. The invention also relates to a waste fuel oil separation system according to the appended claims. Further, the invention relates to a computer program and to a computer-readable medium according to the appended claims.

### BACKGROUND AND PRIOR ART

Ship owners and power plant operators often undertaking measures, such as reduced engine speed and introduction of emission control technologies, to improve fuel efficiency and reduce emissions.

Ship operations often require the use of different types of fuel, which are commonly referred to as marine fuel oils. Marine diesel engines may consume different fuels from heavy fuel oil to lighter distillates such as marine gas oil, provided that an efficient fuel cleaning system is in place on board and that the temperature and viscosity are within the recommended limits for the engine. For this purpose, a well-designed fuel treatment system is required. Centrifugal separators, in combination with filters and a settling tank, are generally accepted as the fuel cleaning system within the industry. In the centrifugal separator, the heavy fuel oil is separated into fuel oil, water and a sludge. The sludge, also defined as waste fuel oil, comprises a mix of oil, solid particles and water. The fuel oil is delivered to the diesel engines as propulsion fuel and the water is collected with the sludge in a sludge tank. The sludge and water, also defined as waste fuel oil, in the sludge tank are taken care of for further treatment.

There are known systems which minimize the sludge by reducing the water in the sludge, and thereafter recovers oil from sludge and thus further minimize the sludge. Such waste fuel oil separation systems and sludge minimization systems may be automated modular systems for the continuous separation and recovery of fuel oil from waste fuel oil onboard ships and in power plants.

The known systems for further treatment of the sludge separates the mixture of oil, solid particles and water from each other. The oil in the waste fuel oil can be recovered as fuel oil and is returned to a fuel oil tank for reuse as propulsion fuel for the engines. Alternatively, the oil may be disposed as waste. The water may be sent to oily bilge water systems, for further cleaning and then processing into the sea. When oil and water are removed from the sludge by the system, a small quantity of dry solids may remain, which simply may be landed as dry waste.

There are also some known lubricating oil purifiers, which are adapted to clean lubrication oils for engines. This cleaning process also generates sludge, which also can be sent to the centrifugal separator, or mixed with the waste fuel oil.

EP 2181744 discloses a known method of operating a waste fuel system comprising a centrifugal separator. EP0123491 discloses a centrifugal separator comprising sensors at the oil outlet and a control unit, wherein the control system controls that heavy components flow out via a recovered oil outlet.

### SUMMARY OF THE INVENTION

The treatment of the sludge or waste fuel oil will separate the solid particles from oil and the water. However, the separating process of the oil from the water may result in an incomplete separation due to the similarity of densities of the oil and the water. Thus, after the separating process the water may comprise a certain quantity of oil, and the oil may comprise a certain quantity of water. Another issue is that high presence of solids in separated water can clog a water outlet of a waste fuel oil separator, resulting in that separated water may leave the separator from an oil outlet together with the separated oil. If the water comprises oil, a bilge tank for collecting the water may be polluted. If the oil comprises water, the oil may not be suitable as fuel oil or propulsion oil for the engines. Thus, the sludge or waste fuel oil is separated into solid particles, oil which may be relatively clean, and water, which may be relatively clean.

Despite the known systems which recover oil from sludge and minimize sludge there is a need to develop a method and a system, which eliminate or minimize remaining oil in a water outlet of such a system. In addition, there is a need to develop a method and a system, which eliminate or minimize remaining water in an oil outlet of such a system.

Thus, an object of the present invention is to develop a method and a system, which eliminate or minimize remaining oil in a water outlet of a waste fuel oil separation system. In addition, there is an object to develop a method and a system, which eliminate or minimize remaining water in an oil outlet of a waste fuel oil separation system.

This is achieved by a method for operating a waste fuel oil separation system according to the appended claims. This is also achieved by a waste fuel oil separation system according to the appended claims. Further, this is achieved by a computer program and to a computer-readable medium according to the appended claims.
According to the invention, a method for operating a waste fuel oil separation system is provided. The method is configured to be performed by a control device. The waste fuel oil separation system comprises: a first centrifugal separator for separating sludge and water from heavy fuel oil or light fuel oil; a waste fuel oil separator connected to the first centrifugal separator for recovering oil from the sludge separated by the first centrifugal separator; a first outlet of the waste fuel oil separator for the recovered oil; a first mass flow meter connected to the first outlet for measuring the flow rate and the density of the recovered oil flowing from the first outlet, , a temperature sensor for measuring the temperature of the recovered oil; a gravity disc arranged in the waste fuel oil separator, which gravity disc is configured to be adapted to the density of the recovered oil and the control device, which is connected to the system, wherein the method comprises: determining the temperature of the recovered oil by the temperature sensor before the step of determining the density of the recovered oil by the first mass flow meter, determining the density of the recovered oil by means of the first mass flow meter; wherein determining the density of the recovered oil by the first mass flow meter comprises calculating an equivalent density of the recovered oil at 15 degrees Celsius from the determined temperature of the recovered oil and from pre-set parameters;
indicating the equivalent density of the recovered oil at 15 degrees Celsius for enabling the adaption of the gravity disc to the density of the recovered oil, and stopping the flow of the recovered oil from the first outlet if the determined density of the recovered oil is above a predetermined density.

This method will eliminate or minimize any remaining water in the oil outlet of the waste fuel oil separation system. In addition, the method will eliminate or minimize any remaining oil in a water outlet of the waste fuel oil separation system. A high density measurement of the recovered oil flowing from the first outlet is an indication that there is something wrong when recovering oil in the system. One reason for failure may result in an incomplete separation due to the similarity of densities of the recovered oil and the water. Other reasons for failure may be that the oil in the sludge has density higher than what the waste fuel oil separator can handle, that the density of the oil in the sludge has changed due to evaporation of lighter oil fractions while the sludge was stored into sludge tank and/or that the recovered oil flowing from the first outlet may comprise a certain quantity of water, due to a second outlet for water has been blocked by solids. Thus, these failures will be detected by the inventive method by determining the density of the recovered oil by means of the first mass flow meter, and action will be taken by stopping the flow of the recovered oil from the first outlet if the determined density of the recovered oil is above a predetermined density. As a result, recovered oil, which may not be suitable as propulsion oil for the engines is not delivered to the engines.

According to an aspect of the invention, a computer program is provided. The computer program comprising instructions which, when the program is executed by a computer, cause the computer to carry out the method according to any one of the preceding claims. Further, a computer-readable medium is provided. The computer-readable medium comprising instructions, which when executed by a computer, cause the computer to carry out the method described herein. This has the advantage that the method may be comprised in pre-programmed software, which may be implemented into the system suitable for utilizing the method.

According to an aspect of the invention, a waste fuel oil separation system is provided. The waste fuel oil separation system comprises: a control device; a first centrifugal separator for separating sludge and water from heavy fuel oil or light fuel oil; a waste fuel oil separator connected to the first centrifugal separator for recovering oil from the sludge separated by the first centrifugal separator; a first outlet of the waste fuel oil separator for the recovered oil; a gravity disc arranged in the waste fuel oil separator, which gravity disc is configured to be adapted to the density of the recovered oil, and a first mass flow meter connected to the first outlet for measuring the flow rate and the density of the recovered oil flowing from the first outlet, a temperature sensor for measuring the temperature of the recovered oil, wherein the control device is configured to determine the temperature of the recovered oil by the temperature sensor, determine the density of the recovered oil by means of the first mass flow meter; calculate an equivalent density of the recovered oil at 15 degrees Celsius by the determined temperature of the recovered oil and pre-set parameters, indicate the equivalent density of the recovered oil at 15 degrees Celsius for enabling the adaption of the gravity disc to the density of the recovered oil, and stop the flow of the recovered oil from the first outlet if the determined density of the recovered oil is above a predetermined density.

Water in the oil outlet of the waste fuel oil separation system will be eliminated or minimized. In addition, any remaining oil in a water outlet of the waste fuel oil separation system will be eliminated or minimized. Remaining water in the oil outlet will be detected by the control unit by determine the density of the recovered oil by means of the first mass flow meter, and action will be taken by the control unit to stop the flow of the recovered oil from the first outlet if the determined density of the recovered oil is above a predetermined density. As a result, recovered oil, which may not be suitable as propulsion oil for the engines is not delivered to the engines. The waste fuel oil separation system may be installed in a fuel line of the fuel supply systems to propulsion engines on a water vessel, such a ship. The waste fuel oil separation system may be installed in a power plant for delivering fuel oil to propulsion engines for generators.

Additional objectives, advantages and novel features of the invention will be apparent to one skilled in the art from the following details, and through exercising the invention. While the invention is described below, it should be apparent that the invention may be not limited to the specifically described details.

### BRIEF DESCRIPTION OF THE DRAWINGS

For fuller understanding of the present disclosure and further objects and advantages of it, the detailed description set out below should be read together with the accompanying drawings, in which the same reference notations denote similar items in the various figures, and in which:
Fig. 1 schematically illustrates a waste fuel oil separation system according to an example,
Fig. 2 schematically illustrates detail view of the waste fuel oil separation system according to an example,
Fig. 3 shows a flowchart of a method according to an example,
Fig. 4 shows a flowchart of a method according to an example, and
Fig. 5 schematically illustrates a control device or computer according to an example.

### DETAILED DESCRIPTION OF THE DRAWINGS

According to the present disclosure, a method for operating a waste fuel oil separation system is provided. The method is configured to be performed by a control device. The waste fuel oil separation system comprises: a first centrifugal separator for separating sludge and water from heavy fuel oil or light fuel oil; a waste fuel oil separator connected to the first centrifugal separator for recovering oil from the sludge separated by the first centrifugal separator; a first outlet of the waste fuel oil separator for the recovered oil; a first mass flow meter connected to the first outlet for measuring the flow rate and the density of the recovered oil flowing from the first outlet, a temperature sensor for measuring the temperature of the recovered oil; a gravity disc arranged in the waste fuel oil separator, which gravity disc is configured to be adapted to the density of the recovered oil and the control device, which is connected to the system. The method comprises: determining the temperature of the recovered oil by the temperature sensor before the step of determining the density of the recovered oil by the first mass flow meter, determining the density of the recovered oil by means of the first mass flow meter; wherein determining the density of the recovered oil by the first mass flow meter comprises calculating an equivalent density of the recovered oil at 15 degrees Celsius from the determined temperature of the recovered oil and from pre-set parameters;
indicating the equivalent density of the recovered oil at 15 degrees Celsius for enabling the adaption of the gravity disc to the density of the recovered oil,
and stopping the flow of the recovered oil from the first outlet if the determined density of the recovered oil is above a predetermined density.

The waste fuel oil separation system recovers and regenerates oil present in sludge, which emanates from a first cleaning stage in the first separator of the system. Instead of waste the oil comprised in the sludge, the sludge is cleaned in a second cleaning stage for recovering the oil. The second cleaning stage comprising the waste fuel oil separator. The waste fuel oil separation system may be a part of a fuel supply line in a ship, which fuel supply line supplies fuel oil to engines for propulsion of the ship.

The method being configured to be performed by a control device. The control device may be a component of the waste fuel oil separation system. The control device may be connected to the system by means of wires. Alternatively, or in combination with wires, the control device may be wireless connected to components of the system.

The first centrifugal separator is configured for separating sludge and water from heavy fuel oil or light fuel oil. The first centrifugal separator may be of a kind known in the art for cleaning fuel oil on board a ship. The separator may thus comprise a rotor that forms within itself a separation chamber in which centrifugal separation of the fuel oil takes place during operation. The separation chamber is provided with a stack of frusto-conical separation discs to facilitate effective separation of the fuel oil. The stack of truncated conical separation discs are examples of surface-enlarging inserts and are fitted centrally and coaxially with the rotor. During operation of the separator, fuel oil to be separated is brought into the separation space. Depending on the density, different phases in the fuel oil is separated between the separation discs. Heavier component, such as a water phase and a sludge phase, move radially outwards between the separation discs, whereas the phase of lowest density, such as the clean oil phase, moves radially inwards between the separation discs and is forced through an outlet arranged at the radial innermost level in the separator. The liquid of higher density is instead forced out through an outlet that is at a larger radial distance. Sludge, accumulates at the periphery of the separation chamber and is emptied intermittently from the separation space by a set of radially arranged sludge outlets being opened, whereupon sludge and a certain amount of fluid is discharged.

The waste fuel oil separator connected to the first centrifugal separator for recovering oil from the sludge is configured to apply a centrifugal force to the sludge and water separated from the fuel oil in the first centrifugal separator. Due to the density difference between fluids and solids in the sludge, the waste fuel oil separator allows separation of the water, oil and the solids in a continuous flowrate. In the waste fuel oil separator, a separation interface occurs between the water and the oil separated from each other and from the solid particles in the sludge. The position of the interface occurs between the water and the oil in the waste fuel oil separator is important in order to achieve a complete separation of the water and the oil from the separator. The position of the interface between the water and the oil is controlled by a gravity disc and a level ring arranged in the separator. The gravity disc and the level ring may be adapted to the density of the oil. Thus, the gravity disc and the level ring may be exchangeable for adapting the gravity disc and the level ring to the density of the recovered oil.

The waste fuel oil separator comprises outlets for water, recovered oil and solid particles. The outlets are separated from each other. The recovered oil leaves and flows out of the first outlet of the waste fuel oil separator. The first mass flow meter is connected to the first outlet for measuring the flow rate and the density of the recovered oil flowing out of the first outlet. The first mass flow meter is configured to simultaneously measure the flow rate and the density of the recovered oil. The first mass flow meter is connected to the control device, which receives information from the first mass flow meter about the flow rate and the density of the recovered oil.

In the method step of determining the density of the recovered oil by means of the first mass flow meter, the determination of the density of the recovered oil occurs in the first mass flow meter. However, this determination may in combination be performed in the control device. Thus, the first mass flow meter may detect the properties of the recovered oil and bring the information further to the control device, which determines the density of the recovered oil. Since there is a possibility that the recovered oil flowing from the first outlet of the waste fuel oil separator is blended with water, the first mass flow meter may thus determine the density of the recovered oil blended with water.

In the method step of stopping the flow of the recovered oil from the first outlet if the determined density of the recovered oil is above a predetermined density, the recovered oil is prevented from reaching a fuel oil tank for the storage of recovered oil. The reason for stopping the flow of the recovered oil from the first outlet to the fuel oil tank is that the recovered oil probably contains water since the determined density of the recovered oil is above a predetermined density. Fuel oil blended with water may not be suitable as propulsion oil for engines. The predetermined density may be stored in a memory in the control device. The predetermined density may be determined based on known density of the fuel oil, such as the heavy fuel oil, as bunker oil in a bunker tank or in a settle tank, which tanks may be comprised in the waste fuel oil separation system. As water has a higher density than the recovered oil flowing from the first outlet, the blend of water and recovered oil may have a density higher than the recovered oil without water. Stopping the flow of the recovered oil from the first outlet my comprise stopping the flow of the recovered oil from the first outlet to ta fuel oil tank by means of a bypass pipe, which directs the recovered oil blended with water to a waste fuel tank. Stopping the flow of the recovered oil from the first outlet my comprise controlling a shut off valve. Stopping the flow of the recovered oil from the first outlet my comprise stopping the waste fuel oil separator. Stopping the flow of the recovered oil from the first outlet my comprise stopping the complete waste fuel oil separation system. Stopping the flow of the recovered oil from the first outlet my comprise issuing a warning signal to an operator, who manually stops the flow of the recovered oil based on the issued warning signal. Stopping the flow of the recovered oil from the first outlet my comprise a combination of the above-mentioned actions.

According to the invention, the waste fuel oil separation system further comprises: a temperature sensor for measuring the temperature of the recovered oil; and wherein before the step of determining the density of the recovered oil by the first mass flow meter, the method further comprises: determining the temperature of the recovered oil by the temperature sensor.

The temperature sensor may be connected to the control device. The control device may adapt the system based on the determined temperature of the recovered oil by the temperature sensor. The temperature of the recovered oil may be determined at a position upstream of, in or downstream of the first mass flow meter.

According to the invention, determining the density of the recovered oil by the first mass flow meter comprises calculating an equivalent density of the recovered oil at 15 degrees Celsius from the determined temperature of the recovered oil and from pre-set parameters.

The oil density at 15 degrees Celsius is calculated by the mass flowmeter. The oil density at 15 degrees Celsius may be calculated by the control device after or when receiving the actual temperature of the recovered oil from the temperature sensor. In the method step of stopping the flow of the recovered oil from the first outlet if the determined density of the recovered oil is above a predetermined density, the determined density and the predetermined density are based on densities at 15 degrees Celsius. The specification of marine fuel oils according to ISO8217 may refer to densities at 15 degrees Celsius. As an example, if the density of 1000kg/m3 at 15 degrees Celsius is detected and determined, the system may determine to stop the flow of recovered oil from the first outlet because at such density the recovered oil will contain water. In addition, the system may be automatically stopped at such high density because the waste oil separator is not able to separate oil at such high density from the sludge.

According to an aspect, the method further comprises: receiving the pre-set parameters from a memory connected to the control device.

The memory may be arranged in the control device. The memory may be a separate unit connected to the control device. The pre-set parameters may be based on the specification of the bunker fuel oil used. These specifications may be achieved from ISO-standards for the bunker fuel oils. Alternatively, a density sensor and a temperature sensor in a bunker tank or in a settle tank may send signals to the control device, which calculates the density of the bunker fuel oil at 15 degrees Celsius. The calculated density may be stored in the memory as a pre-set parameter.

According to the invention, the waste fuel oil separation system further comprises: a gravity disc arranged in the waste fuel oil separator, which gravity disc is configured to be adapted to the density of the recovered oil, the method further comprises: indicating the equivalent density of the recovered oil at 15 degrees Celsius for enabling the adaption of the gravity disc to the density of the recovered oil.

The position of the interface between the water and the recovered oil may be controlled by a gravity disc and a level ring arranged in the separator. The gravity disc and the level ring may be adapted to the density of the recovered oil. Thus, the gravity disc and the level ring may be exchangeable for adapting the gravity disc and the level ring to the density of the oil. Remaining the separation interface between a disc stack in the separator and the top disc may avoid rupture of the water seal created by the interface, which may result in a good separation efficiency. Information about the correct gravity disc for remaining the separation interface may be achieved by the control device. A pre-set table over suitable gravity discs may be stored in the memory of the control device. The suitable gravity disc adapted to the density of the recovered oil is presented for an operator of the system, which may change the gravity disc in the separator if needed. Alternatively, the gravity disc may be automatically changed based on the information from the control device.

According to an aspect, the waste fuel oil separation system further comprises: an oil sensor connected to a second outlet of the waste fuel oil separator for measuring oil in the density of the separated water flowing from the second outlet, the method further comprises: detecting oil in the separated water by the oil sensor; and stopping the flow of the separated water from the second outlet if oil is detected in the separated water.

If the separation interface between water and the oil in the separator may be displaced, the oil may be blended with separated water flowing from the second outlet. The flow of the separated water from the second outlet is stopped if oil is detected in the water.

Stopping the flow of the separated water from the second outlet may comprise stopping the flow of the separated water from the second outlet to ta bilge tank by means of a bypass pipe, which directs the separated water blended with waste fuel oil water to a waste water tank. Stopping the flow of the separated water from the second outlet my comprise controlling a shut off valve. Stopping the flow of the separated water from the second outlet may comprise stopping the waste fuel oil separator. Stopping the flow of the separated water from the second outlet may comprise stopping the complete waste fuel oil separation system. Stopping the flow of the separated water from the second outlet may comprise issuing a warning signal to an operator, who manually stops the flow of the separated water based on the issued warning signal. Stopping the flow of the separated water from the second outlet may comprise a combination of the above-mentioned actions.

The present disclosure also relates to a computer program comprising instructions which, when the program is executed by a computer, causes the computer to carry out the method disclosed above. The invention further relates to a computer-readable medium comprising instructions, which when executed by a computer causes the computer to carry out the method disclosed above. The method may be comprised in pre-programmed software, which may be implemented into the waste fuel oil separation system suitable for utilizing the method. The pre-programmed software may be stored in the control device. Alternatively, or in combination, the software may be stored in a memory or in computer at a distance from the control device.

According to the present invention, a waste fuel oil separation system is provided. The waste fuel oil separation system comprising: a control device; a first centrifugal separator for separating sludge and water from heavy fuel oil or light fuel oil; a waste fuel oil separator connected to the first centrifugal separator for recovering oil from the sludge separated by the first centrifugal separator; a first outlet of the waste fuel oil separator for the recovered oil; a gravity disc arranged in the waste fuel oil separator, which gravity disc is configured to be adapted to the density of the recovered oil, a first mass flow meter connected to the first outlet for measuring the flow rate and the density of the recovered oil flowing from the first outlet and a temperature sensor for measuring the temperature of the recovered oil, wherein the control device is configured to determine the temperature of the recovered oil by the temperature sensor, determine the density of the recovered oil by means of the first mass flow meter, calculate an equivalent density of the recovered oil at 15 degrees Celsius by the determined temperature of the recovered oil and pre-set parameters, indicate the equivalent density of the recovered oil at 15 degrees Celsius for enabling the adaption of the gravity disc to the density of the recovered oil; and stop the flow of the recovered oil from the first outlet if the determined density of the recovered oil is above a predetermined density.

It will be appreciated that all the examples described for the method aspect of the disclosure performed by the control device are also applicable to the waste fuel oil separation system aspect of the disclosure. That is, the control device of the system may be configured to perform any one of the steps of the method according to the various examples described above. Thus, according to the following aspects, the control device of the system may be configured to perform the method steps according to the corresponding examples and aspects described above.

Thus, the waste fuel oil separation system further comprises: a temperature sensor for measuring the temperature of the recovered oil; and wherein the control device is configured to: determine the temperature of the recovered oil by the temperature sensor. According to the invention, the control device is configured to: calculate an equivalent density of the recovered oil at 15 degrees Celsius by the determined temperature of the recovered oil and pre-set parameters. According to an aspect, the control device is configured to: receive the pre-set parameters from a memory connected to the control device. According to an aspect, the waste fuel oil separation system further comprises: a gravity disc arranged in the waste fuel oil separator, which gravity disc is configured to be adapted to the density of the recovered oil, wherein the control device is configured to: indicate the equivalent density of the recovered oil at 15 degrees Celsius for enabling the adaption of the gravity disc to the density of the recovered oil. According to an aspect, the waste fuel oil separation system further comprises: an oil sensor connected to the second outlet for detecting oil in the separated water flowing from the second outlet, wherein the control device is configured to: detecting oil in the separated water by the oil sensor; and stop the flow of the separated water from the second outlet if oil is detected in the separated water.

The method for operating a waste fuel oil separation system, the waste fuel oil separation system, the computer program and the computer-readable medium will now be described together with the appended drawings.

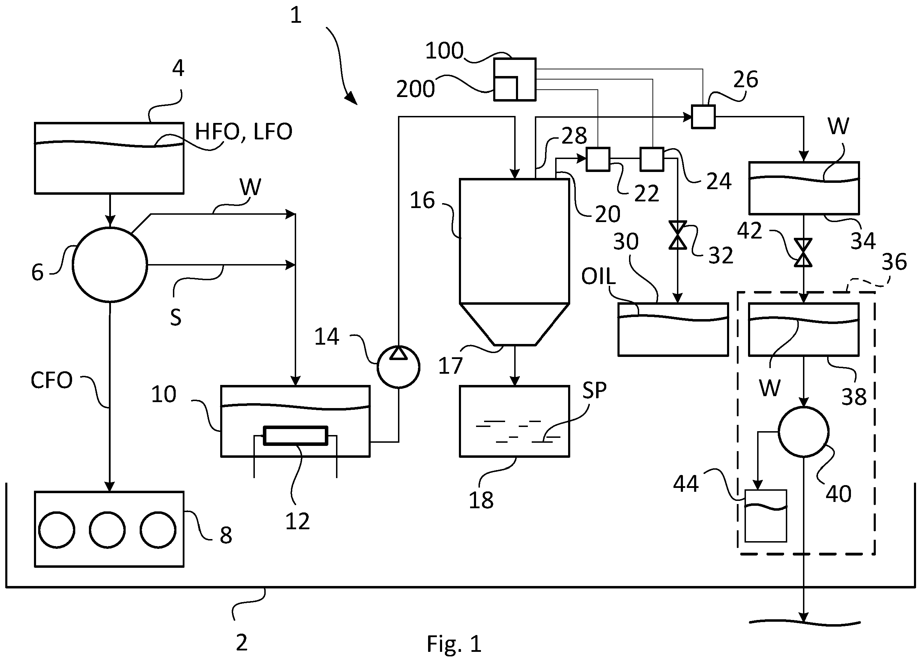

Fig. 1 schematically illustrates a waste fuel oil separation system 1 according to an example. The system 1 may for example be arranged onboard a ship 2. The system comprising a bunker tank 4 in which bunker oil, such as heavy fuel oil, HFO or light fuel oil, LFO is collected. The bunker tank may alternatively be designed as a settling tank in which the heavy fuel oil or light fuel oil is collected. The bunker tank 4 is connected to a first centrifugal separator 6 for separating sludge, S and water, W from the heavy fuel oil or light fuel oil. The heavy fuel oil or light fuel oil is supplied to an engine 8 as clean fuel oil, CFO after being separated from sludge and water in the first centrifugal separator 6. The clean fuel oil is used as fuel for propulsion of the engine 8. The engine 8 may be used for propelling the ship 2.

Sludge and water separated from the heavy fuel oil or light fuel oil in first centrifugal separator 6 is conveyed in various proportions to a sludge and water tank 10. In the sludge and water tank 10 a heating device 12 is arranged. The heating device 12 is used for increasing or keeping the sludge and water in the sludge and water tank 10 at a predetermined temperature.

The sludge and water are conveyed from the sludge and water tank 10 by means of a pump 14 to a waste fuel oil separator 16. In a waste fuel oil separator 16 water and any oil, OIL in the sludge are separated from the sludge. After the water and oil have been separated from the sludge, the remaining sludge is discharged from a waste outlet 17 and collected in a waste container 18 as solid particles, SP.

The recovered oil is flowing out through a first outlet 20 of the waste fuel oil separator 16. A first mass flow meter 22 is connected to the first outlet 20 for measuring the flow rate and the density of the recovered oil flowing from the first outlet 20. In addition, a temperature sensor 24 for measuring the temperature of the recovered oil is connected to the first outlet 20 of the waste fuel oil separator 16. The temperature sensor 24 may be integrated in the first mass flow meter 22. The recovered oil is conveyed to a first regenerated fuel oil tank 30, which is connected to the first outlet 20 of the waste fuel oil separator 16. A first valve 32 is arranged before the first regenerated fuel oil tank 30. By closing the first valve 32 the flow of the recovered oil is stopped and will not reach the first regenerated fuel oil tank 30. The first valve 32 will be closed if it is determined that the density of the recovered oil is above a predetermined density. Alternatively, a warning signal will be issued.

An oil sensor 26 is connected to a second outlet 28 of the waste fuel oil separator 16 for detecting oil in the separated water flowing from the second outlet 28. A primary bilge tank 34 is connected to the second outlet 28 of the waste fuel oil separator 16. The separated water from in the waste fuel oil separator 16 is conveyed to the primary bilge tank 34. A second valve 42 is arranged downstream of the primary bilge tank 34.

A bilge system 36 is arranged downstream of the primary bilge tank 34. The bilge system 36 is comprised in the waste fuel oil separation system 1. The bilge system 36 comprises a bilge tank 38 and a second centrifugal separator 40 arranged downstream of the bilge tank 38. The second centrifugal separator 40 may have a configuration and design similar to the first centrifugal separator 30. By closing the second valve 42 the flow of the separated water from the second outlet 28 is stopped and the separated water will not reach the bilge system 36 and the bilge tank 38. The second valve 42 may be closed if oil is detected in the separated water.

Water separated from oil in the second centrifugal separator 40 is discharged into the sea and the separated oil is conveyed to a second regenerated fuel oil tank 44. Alternatively, the separated regenerated fuel oil in the second centrifugal separator 40 is conveyed to the first regenerated fuel oil tank 30. Alternatively, the separated regenerated fuel oil in the second centrifugal separator 40 is conveyed to the sludge and water tank 10.

A control device 100 is connected to all controllable components of the waste fuel oil separation system 1. In fig. 1, the control device 100 is schematically connected to the first and second mass flow meters 22, 26. However, the control device 100 is connected to all other controllable components of the waste fuel oil separation system 1, such as the first and second valves 32, 42, the first and second centrifugal separators 6, 40 and the waste fuel oil separator 16. The control device 100 may also be connected to any sensor device, such as the first and second mass flow meters 22, 26 of the waste fuel oil separation system 1. The control device comprises a memory 200.

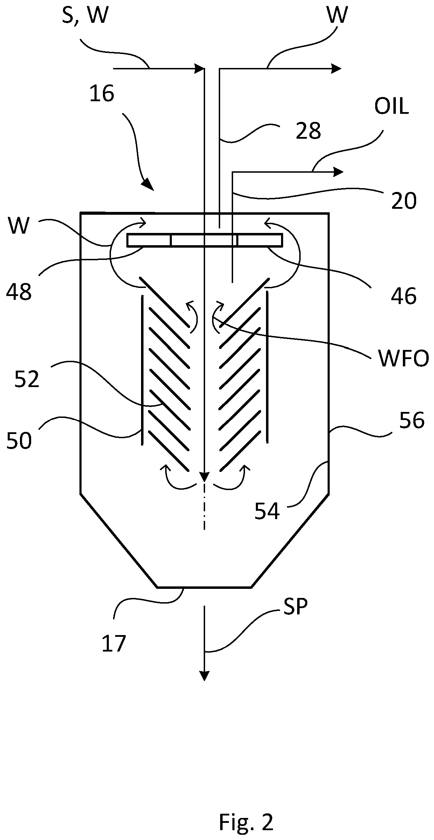

Fig. 2 schematically illustrates detail view of the waste fuel oil separation system 1 according to an example. The detail view schematically illustrates the waste fuel oil separator 16 comprised in the waste fuel oil separation system 1. The waste fuel oil separator 16 is configured to apply a centrifugal force to the sludge and water separated from the fuel oil in the first centrifugal separator 6. Due to the density difference between fluids and solids in the sludge, the waste fuel oil separator 16 allows separation of the water, oil and the solids in a continuous flowrate. A gravity disc 46 and a level ring 48 are arranged in the waste fuel oil separator 16. The position of an interface between the water and the oil in the waste fuel oil separator 16 may be controlled by the gravity disc 46 and the level ring 48. The gravity disc 46 and the level ring 48 may be adapted to the density of the oil. Thus, the gravity disc 46 and the level ring 48 may be exchangeable for adapting the gravity disc 46 and the level ring 48 to the density of the oil. The waste fuel oil separator 16 comprises the first outlet 20 for recovered oil, the second outlet 28 for separated water and the waste outlet 17 for solid particles. The outlets 17, 20, 28 are separated from each other.

The waste fuel oil separator 16 comprises an inner rotor 50 in which centrifugal separation of the waste fuel oil and water takes place during operation. A stack of frusto-conical separation discs 52 facilitates effective separation of the oil and water. During operation of the waste fuel oil separator 16, the sludge together with water to be separated is brought into the space of the waste fuel oil separator 16. Depending on the density, oil and water are separated from solids in the sludge. The heavy solids are forced radially outwards to the inner surface 54 of the outer wall 56 of the waste fuel oil separator 16 and falling by gravity towards the waste outlet 17. Oil and water are separated between the separation discs 52 and move radially outwards between the separation discs 52, whereas the phase of lowest density, such as the oil, moves radially inwards between the separation discs 52 and is forced through the first outlet 20. The liquid of higher density, the water, is instead forced out through the second outlet 28.

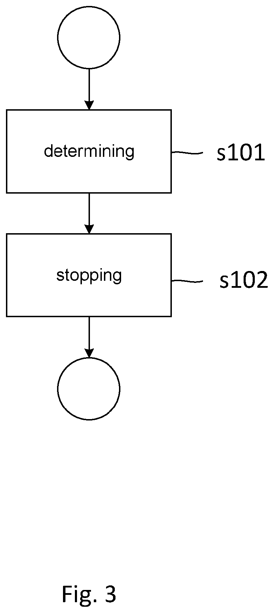

Fig. 3 shows a flowchart of a method for operating a waste fuel oil separation system 1 according to an example. The method being configured to be performed by a control device 100, The method thus relates to the waste fuel oil separation system 1 disclosed in fig. 1. The waste fuel oil separation system 1 comprises a first centrifugal separator 6 for separating sludge and water from heavy fuel oil or light fuel oil; a waste fuel oil separator 16 connected to the first centrifugal separator 6 for recovering oil from the sludge separated by the first centrifugal separator 6; a first outlet 20 of the waste fuel oil separator 16 for the recovered oil; a first mass flow meter 22 connected to the first outlet 20 for measuring the flow rate and the density of the recovered oil flowing from the first outlet 20, and the control device 100, which is connected to the system 1. The method comprises determining s101 the density of the recovered oil by means of the first mass flow meter 22; and stopping the flow of the recovered oil from the first outlet 20 if the determined density of the recovered oil is above a predetermined density.

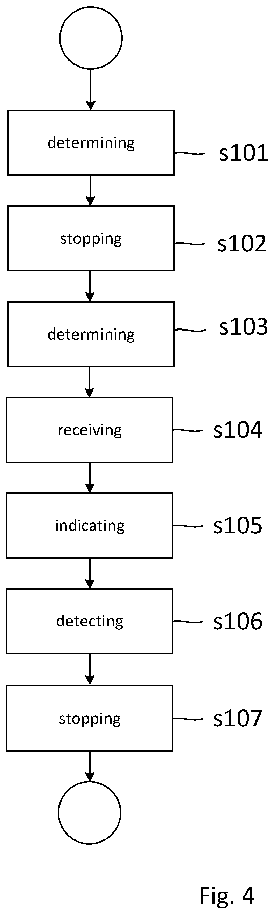

Fig. 4 shows a flowchart of a method for operating a waste fuel oil separation system 1 according to an example. The method being configured to be performed by a control device 100, The method thus relates to the waste fuel oil separation system 1 disclosed in fig. 1. The waste fuel oil separation system 1 comprises: a first centrifugal separator 6 for separating sludge and water from heavy fuel oil or light fuel oil; a waste fuel oil separator 16 connected to the first centrifugal separator 6 for recovering oil from the sludge separated by the first centrifugal separator 6; a first outlet 20 of the waste fuel oil separator 16 for the recovered oil; a first mass flow meter 22 connected to the first outlet 20 for measuring the flow rate and the density of the recovered oil flowing from the first outlet 20, and the control device 100, which is connected to the system 1. The waste fuel oil separation system 1 further comprises: a temperature sensor 24 for measuring the temperature of the recovered oil; and wherein before the step of determining s101 the density of the recovered oil by the first mass flow meter 22; a gravity disc 46 arranged in the waste fuel oil separator 16, which gravity disc 46 is configured to be adapted to the density of the recovered oil; and an oil sensor 26 connected to a second outlet 28 of the waste fuel oil separator 16 for detecting oil the separated water flowing from the second outlet 28.

The method comprises: determining s101 the density of the recovered oil by means of the first mass flow meter 22; and stopping the flow of the recovered oil from the first outlet 20 if the determined density of the recovered oil is above a predetermined density; before the step of determining s101 the density of the recovered oil by the first mass flow meter 22, the method further comprises: determining s103 the temperature of the recovered oil by the temperature sensor 24. Determining s101 the density of the recovered oil by the first mass flow meter 22 comprises calculating an equivalent density of the recovered oil at 15 degrees Celsius from the determined temperature of the recovered oil and from pre-set parameters. The method further comprises: receiving s104 the pre-set parameters from a memory 200 connected to the control device 100; indicating s105 the equivalent density of the recovered oil at 15 degrees Celsius for enabling the adaption of the gravity disc 46 to the density of the recovered oil; detecting s106 oil in the separated water by the oil sensor26; and stopping s107 the flow of the separated water from the second outlet 28 if oil is detected in the separated.

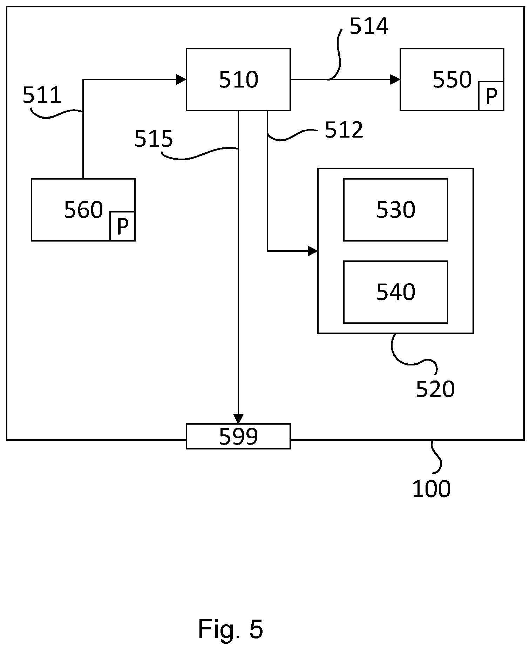

Fig. 5 schematically illustrates a diagram of a version of a device 500. The control device 100 described with reference to fig. 1 may in a version comprise the device 500. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 may comprise the memory 200 of fig. 1. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P which comprises instructions for carry out the above-mentioned method. The program P may be stored in an executable form or in a compressed form in a memory 560 and/or in a read/write memory 550.

Where the data processing unit 510 is described as performing a certain function, it means that the data processing unit 510 effects a certain part of the program stored in the memory 560 or a certain part of the program stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

The foregoing description of the preferred embodiments of the present invention is provided for illustrative and descriptive purposes. It is not intended to be exhaustive or to restrict the invention to the variants described.

## Claims

1. A method for operating a waste fuel oil separation system (1), the method being configured to be performed by a control device (100), the waste fuel oil separation system (1) comprising:
a first centrifugal separator (6) for separating sludge and water from heavy fuel oil or light fuel oil;
a waste fuel oil separator (16) connected to the first centrifugal separator (6) for recovering oil from the sludge separated by the first centrifugal separator (6);
a first outlet (29) of the waste fuel oil separator (16) for the recovered oil;
a first mass flow meter (22) connected to the first outlet (20) for measuring the flow rate and the density of the recovered oil flowing from the first outlet (20),
a temperature sensor (24) for measuring the temperature of the recovered oil;
a gravity disc (46) arranged in the waste fuel oil separator (16), which gravity disc (46) is configured to be adapted to the density of the recovered oil; and
the control device (100), which is connected to the system (1),
wherein the method comprises:
determining (s103) the temperature of the recovered oil by the temperature sensor (24) before the step of determining (s101) the density of the recovered oil by the first mass flow meter (22);
determining (s101) the density of the recovered oil by means of the first mass flow meter (22), wherein determining (s101) the density of the recovered oil by the first mass flow meter (22) comprises calculating an equivalent density of the recovered oil at 15 degrees Celsius from the determined temperature of the recovered oil and from pre-set parameters;
indicating (s105) the equivalent density of the recovered oil at 15 degrees Celsius for enabling the adaption of the gravity disc (46) to the density of the recovered oil; and
stopping (s102) the flow of the recovered oil from the first outlet (20) if the determined density of the recovered oil is above a predetermined density.

2. The method according to claim 1, wherein the method further comprises:
receiving (s104) the pre-set parameters from a memory (200) connected to the control device (100).

3. The method according to any one of the preceding claims, wherein the waste fuel oil separation system (1) further comprises:
an oil sensor (26) connected to a second outlet (28) of the waste fuel oil separator for detecting oil in the separated water flowing from the second outlet (28), the method further comprises:
detecting (s106) oil in the separated water by the oil sensor (26); and
stopping (s107) the flow of the separated water from the second outlet (28) if oil is detected in the separated water.

4. A computer program (P) comprising instructions which, when the program is executed by a computer (100; 500), cause the computer (100; 500) to carry out the method according to any one of the preceding claims.

5. A computer-readable medium comprising instructions, which when executed by a computer (100; 500), cause the computer (100; 500) to carry out the method according to any one of claims 1-3.

6. A waste fuel oil separation system (1) comprising:
a control device (100);
a first centrifugal separator (6) for separating sludge and water from heavy fuel oil or light fuel oil;
a waste fuel oil separator (16) connected to the first centrifugal separator (6) for recovering oil from the sludge separated by the first centrifugal separator (6);
a first outlet (20) of the waste fuel oil separator (16) for the recovered oil;
a gravity disc (46) arranged in the waste fuel oil separator (16), which gravity disc (46) is configured to be adapted to the density of the recovered oil, and
a first mass flow meter (22) connected to the first outlet (20) for measuring the flow rate and the density of the recovered oil flowing from the first outlet (20),
a temperature sensor (24) for measuring the temperature of the recovered oil;
wherein the control device (100) is configured to:
determine the temperature of the recovered oil by the temperature sensor (24),
determine the density of the recovered oil by means of the first mass flow meter (22),
calculate an equivalent density of the recovered oil at 15 degrees Celsius by the determined temperature of the recovered oil and pre-set parameters,
indicate the equivalent density of the recovered oil at 15 degrees Celsius for enabling the adaption of the gravity disc (46) to the density of the recovered oil, and
stop the flow of the recovered oil from the first outlet (20) if the determined density of the recovered oil is above a predetermined density.

7. The system (1) according to claim 6, wherein the control device (100) is configured to:
receive the pre-set parameters from a memory (200) connected to the control device (100).

8. The system (1) according to any one of claims 6 or 7, wherein the waste fuel oil separation system (1) further comprises:
an oil sensor (26) connected to the second outlet (28) for detecting oil in the separated water flowing from the second outlet (28), wherein the control device (100) is configured to:
detect oil in the separated water by oil sensor (26); and
stop the flow of the separated water from the second outlet (28) if oil is detected in the separated water.

## Patentansprüche

1. Verfahren zum Betreiben eines Altheizöl-Trennsystems (1), wobei das Verfahren konfiguriert ist, von einer Steuervorrichtung (100) durchgeführt zu werden, wobei das Altheizöl-Trennsystem (1) umfasst:
einen ersten Zentrifugalseparator (6) zum Abtrennen von Schlamm und Wasser von Schwerheizöl oder Leichtheizöl;
einen mit dem ersten Zentrifugalseparator (6) verbundenen Altheizölabscheider (16) zum Rückgewinnen von Öl aus dem vom ersten Zentrifugalseparator (6) abgetrennten Schlamm;
einen ersten Auslass (29) des Altheizölabscheiders (16) für das zurückgewonnene Öl;
einen ersten Massendurchflussmesser (22), der mit dem ersten Auslass (20) verbunden ist, um die Durchflussrate und die Dichte des aus dem ersten Auslass (20) fließenden, zurückgewonnenen Öls zu messen,
einen Temperatursensor (24) zum Messen der Temperatur des zurückgewonnenen Öls;
eine Schwerkraftscheibe (46), die im Altheizölabscheider (16) angeordnet ist, dessen Schwerkraftscheibe (46) so konfiguriert ist, dass sie an die Dichte des zurückgewonnenen Öls angepasst ist; und
die Steuervorrichtung (100), die mit dem System (1) verbunden ist, wobei das Verfahren umfasst:
Bestimmen (s103) der Temperatur des zurückgewonnenen Öls mit dem Temperatursensor (24) vor dem Schritt zum Bestimmen (s101) der Dichte des zurückgewonnenen Öls mit dem ersten Massendurchflussmesser (22);
Bestimmen (s101) der Dichte des zurückgewonnenen Öls mit Hilfe des ersten Massendurchflussmessers (22), wobei Bestimmen (s101) der Dichte des zurückgewonnenen Öls mit dem ersten Massendurchflussmesser (22) Berechnen einer äquivalenten Dichte des zurückgewonnenen Öls bei 15 Grad Celsius aus der bestimmten Temperatur des zurückgewonnenen Öls und aus voreingestellten Parametern umfasst;
Angeben (s105) der äquivalenten Dichte des zurückgewonnenen Öls bei 15 Grad Celsius, um die Anpassung der Gravitationsscheibe (46) an die Dichte des zurückgewonnenen Öls zu ermöglichen; und
Stoppen (s102) des Zuflusses des zurückgewonnenen Öls aus dem ersten Auslass (20), wenn die bestimmte Dichte des zurückgewonnenen Öls eine vorbestimmte Dichte überschreitet.

2. Verfahren nach Anspruch 1, wobei das Verfahren ferner umfasst:
Empfangen (s104) der voreingestellten Parameter aus einem Speicher (200), der mit der Steuervorrichtung (100) verbunden ist.

3. Verfahren nach einem der vorstehenden Ansprüche, wobei das Altheizöl-Trennsystem (1) ferner umfasst:
einen Ölsensor (26), der mit einem zweiten Auslass (28) des Altheizölabscheiders verbunden ist, um Öl im abgeschiedenen Wasser zu detektieren, das aus dem zweiten Auslass (28) fließt, wobei das Verfahren ferner umfasst:
Detektieren von Öl (s106) im abgetrennten Wasser durch den Ölsensor (26); und
Stoppen (s107) des Abflusses des abgetrennten Wassers aus dem zweiten Auslass (28), wenn Öl im abgetrennten Wasser detektiert wird.

4. Computerprogramm (P), das Anweisungen umfasst, die, wenn das Programm von einem Computer (100; 500) ausgeführt wird, den Computer (100; 500) veranlassen, das Verfahren nach einem der vorstehenden Ansprüche auszuführen.

5. Computerlesbares Medium, das Anweisungen umfasst, die, wenn sie von einem Computer (100; 500) ausgeführt werden, den Computer (100; 500) veranlassen, das Verfahren nach einem der Ansprüche 1-3 auszuführen.

6. Altheizöl-Trennsystem (1) umfassend:
eine Steuervorrichtung (100);
einen ersten Zentrifugalseparator (6) zum Abtrennen von Schlamm und Wasser von Schwerheizöl oder Leichtheizöl;
einen mit dem ersten Zentrifugalseparator (6) verbundenen Altheizölabscheider (16) zum Rückgewinnen von Öl aus dem vom ersten Zentrifugalseparator (6) abgetrennten Schlamm;
einen ersten Auslass (20) des Altheizölabscheiders (16) für das zurückgewonnene Öl;
eine Schwerkraftscheibe (46), die im Altheizölabscheider (16) angeordnet ist, dessen Schwerkraftscheibe (46) so konfiguriert ist, dass sie an die Dichte des zurückgewonnenen Öls angepasst ist, und
einen ersten Massendurchflussmesser (22), der mit dem ersten Auslass (20) verbunden ist, um die Durchflussrate und die Dichte des aus dem ersten Auslass (20) fließenden, zurückgewonnenen Öls zu messen,
einen Temperatursensor (24) zum Messen der Temperatur des zurückgewonnenen Öls; wobei die Steuervorrichtung (100) konfiguriert ist:
die Temperatur des zurückgewonnenen Öls mit dem Temperatursensor (24) zu bestimmen,
die Dichte des zurückgewonnenen Öls mit Hilfe des ersten Massendurchflussmessers (22) zu bestimmen,
eine äquivalente Dichte des zurückgewonnenen Öls bei 15 Grad Celsius anhand der bestimmten Temperatur des zurückgewonnenen Öls und voreingestellter Parameter zu berechnen,
die äquivalente Dichte des zurückgewonnenen Öls bei 15 Grad Celsius anzugeben, um die Anpassung der Gravitationsscheibe (46) an die Dichte des zurückgewonnenen Öls zu ermöglichen, und
den Zufluss des zurückgewonnenen Öls aus dem ersten Auslass (20) zu stoppen, wenn die bestimmte Dichte des zurückgewonnenen Öls eine vorbestimmte Dichte überschreitet.

7. System (1) nach Anspruch 6, wobei die Steuervorrichtung (100) konfiguriert ist:
die voreingestellten Parameter aus einem Speicher (200) zu empfangen, der mit dem Steuervorrichtung (100) verbunden ist.

8. System (1) nach einem der Ansprüche 6 oder 7, wobei das Altheizöl-Trennsystem (1) ferner umfasst:
einen Ölsensor (26), der mit dem zweiten Auslass (28) verbunden ist, um Öl im abgetrennten Wasser zu detektieren, das aus dem zweiten Auslass (28) fließt, wobei die Steuervorrichtung (100) konfiguriert ist:
Öl im abgetrennten Wasser mit dem Ölsensor (26) zu detektieren; und
den Zufluss des abgetrennten Wassers aus dem zweiten Auslass (28) zu stoppen, wenn Öl im abgetrennten Wasser detektiert wird.

## Revendications

1. Procédé de fonctionnement d'un système de séparation de fioul usé (1), le procédé étant configuré pour être mis en œuvre par un dispositif de commande (100), le système de séparation de fioul usé (1) comprenant :
un premier séparateur centrifuge (6) pour séparer les boues et l'eau du fioul lourd ou du fioul léger ;
un séparateur de fioul usé (16) relié au premier séparateur centrifuge (6) pour récupérer le pétrole des boues séparées par le premier séparateur centrifuge (6) ;
une première sortie (29) du séparateur de fioul usé (16) pour le pétrole récupéré ;
un premier débitmètre massique (22) relié à la première sortie (20) pour mesurer le débit et la densité du pétrole récupéré s'écoulant de la première sortie (20),
un capteur de température (24) pour mesurer la température du pétrole récupéré ;
un disque de gravité (46) agencé dans le séparateur de fioul usé (16), lequel disque de gravité (46) est configuré pour s'adapter à la densité du pétrole récupéré ; et
le dispositif de commande (100), qui est relié au système (1), dans lequel le procédé comprend :
la détermination (s103) de la température du pétrole récupéré par le capteur de température (24) avant l'étape de détermination (s101) de la densité du pétrole récupéré par le premier débitmètre massique (22) ;
la détermination (s101) de la densité du pétrole récupéré au moyen du premier débitmètre massique (22), dans lequel la détermination (s101) de la densité du pétrole récupéré par le premier débitmètre massique (22) comprend le calcul d'une densité équivalente du pétrole récupéré à 15 degrés Celsius à partir de la température déterminée du pétrole récupéré et à partir de paramètres prédéfinis ;
l'indication (s105) de la densité équivalente du pétrole récupéré à 15 degrés Celsius pour permettre l'adaptation du disque de gravité (46) à la densité du pétrole récupéré ; et
l'arrêt (s102) du flux de pétrole récupéré à partir de la première sortie (20) si la densité déterminée du pétrole récupéré est supérieure à une densité prédéterminée.

2. Procédé selon la revendication 1, dans lequel le procédé comprend en outre :
la réception (s104) des paramètres prédéfinis à partir d'une mémoire (200) reliée au dispositif de commande (100).

3. Procédé selon l'une quelconque des revendications précédentes, dans lequel le système de séparation de fioul usé (1) comprend en outre :
un capteur de pétrole (26) relié à une seconde sortie (28) du séparateur de fioul usé pour détecter le pétrole dans l'eau séparée s'écoulant de la seconde sortie (28), le procédé comprend en outre :
la détection (s106) de pétrole dans l'eau séparée par le capteur de pétrole (26) ; et
l'arrêt (s107) du flux d'eau séparée de la seconde sortie (28) si du pétrole est détecté dans l'eau séparée.

4. Programme informatique (P) comprenant des instructions qui, lorsque le programme est exécuté par un ordinateur (100 ; 500), amènent l'ordinateur (100 ; 500) à mettre en œuvre le procédé selon l'une quelconque des revendications précédentes.

5. Support lisible par ordinateur comprenant des instructions qui, lorsqu'elles sont exécutées par un ordinateur (100 ; 500), amènent l'ordinateur (100 ; 500) à mettre en œuvre le procédé selon l'une quelconque des revendications 1-3.

6. Système de séparation de fioul usé (1) comprenant :
un dispositif de commande (100) ;
un premier séparateur centrifuge (6) pour séparer les boues et l'eau du fioul lourd ou du fioul léger ;
un séparateur de fioul usé (16) relié au premier séparateur centrifuge (6) pour récupérer le pétrole des boues séparées par le premier séparateur centrifuge (6) ;
une première sortie (20) du séparateur de fioul usé (16) pour le pétrole récupéré ;
un disque de gravité (46) agencé dans le séparateur de fioul usé (16), lequel disque de gravité (46) est configuré pour s'adapter à la densité du pétrole récupéré, et
un premier débitmètre massique (22) relié à la première sortie (20) pour mesurer le débit et la densité du pétrole récupéré s'écoulant de la première sortie (20),
un capteur de température (24) pour mesurer la température du pétrole récupéré ; dans lequel le dispositif de commande (100) est configuré pour :
déterminer la température du pétrole récupéré par le capteur de température (24),
déterminer la densité du pétrole récupéré au moyen du premier débitmètre massique (22),
calculer une densité équivalente du pétrole récupéré à 15 degrés Celsius à partir de la température déterminée du pétrole récupéré et des paramètres prédéfinis,
indiquer la densité équivalente du pétrole récupéré à 15 degrés Celsius pour permettre l'adaptation du disque de gravité (46) à la densité du pétrole récupéré, et
arrêter le flux de pétrole récupéré à partir de la première sortie (20) si la densité déterminée du pétrole récupéré est supérieure à une densité prédéterminée.

7. Système (1) selon la revendication 6, dans lequel le dispositif de commande (100) est configuré pour :
recevoir les paramètres prédéfinis à partir d'une mémoire (200) reliée au dispositif de commande (100).

8. Système (1) selon l'une quelconque des revendications 6 ou 7, dans lequel le système de séparation de fioul usé (1) comprend en outre :
un capteur de pétrole (26) relié à la seconde sortie (28) pour détecter le pétrole dans l'eau séparée s'écoulant de la seconde sortie (28), dans lequel le dispositif de commande (100) est configuré pour :
détecter du pétrole dans l'eau séparée par le capteur de pétrole (26) ; et
arrêter le flux d'eau séparée de la seconde sortie (28) si du pétrole est détecté dans l'eau séparée.
